# EUROPEAN PATENT APPLICATION

(11) **EP 1 839 811 A1**
(43) Date of publication of application: **03.10.2007**
(21) Application number: 05809500.1
(22) Date of filing: 22.11.2005
(51) Int. Cl.: B24B 35/00, B24B 19/06, B24B 49/03, F16C 19/06

(54) **MANUFACTURING FACILITY AND SUPER FINISHING APPARATUS FOR BALL BEARING**

(30) Priority: 22.11.2004 JP 2004337519
(71) Applicant: NSK Ltd., Tokyo 141-8560 (JP)
(72) Inventor: SENSUI, Natsuki, Kanagawa 251-8501 (JP); JOHNISHI, Shuji, Kanagawa 251-8501 (JP); IRIE, Yosuke, Kanagawa 251-8501 (JP)
(74) Representative: Grünecker, Kinkeldey, Stockmair & Schwanhäusser Anwaltssozietät
(86) International application number: PCT/JP2005/021461
(87) International publication number: WO 2006/054772

(57) **Abstract**

A detection unit of a matching apparatus 32 is connected to a control unit 6 of a computer so that a detection signal indicating measured values of diameters of outer and inner ring raceways can be sent thereinto. An outer ring secondary grinding apparatus 24, an outer ring super finish machining apparatus 25a, an inner ring secondary grinding apparatus 26 and an inner ring super finish machining apparatus 28a are connected to the control unit 6 so that control signals can be received. The control unit 6 imparts shift amounts to diameter machining target values which are set, respectively, in the grinding apparatus 24, 26 and the super finish machining apparatus 25a, 28a for machining a raceway surface of at least one bearing ring of outer and inner rings, based on measured values of diameters of the outer and inner ring raceways which were measured by the detection unit.

## Description

### Technical Field

The present invention relates to an improved ball bearing manufacturing facility having bearing ring machining equipment for machining bearing rings for ball bearings and assembling equipment for assembling the bearing rings and balls together, and an improved super finish machining apparatus for use in the manufacturing facility.

### Background Art

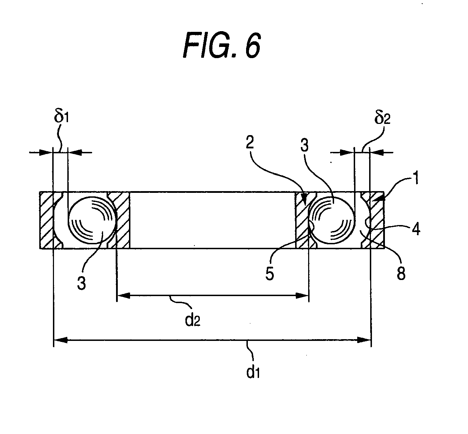

A construction such as shown in Fig. 6 is known as a ball bearing. Note that in Fig. 6, a bearing gap is illustrated in an exaggerated fashion as will be described later on. This ball bearing is made up by placing a plurality of balls 3, 3 between an outer ring 1 and an inner ring 2 which are disposed, concentrically with each other. Among these constituent components, an outer ring raceway 4 and an inner ring raceway 5 are formed on inner circumferential surface of the outer ring 1 and an outer circumferential surface of the inner ring 2 in such a manner as to extend along the full circumferences of the outer ring 1 and the inner ring 2, respectively. The individual balls 3, 3 are disposed between the outer raceway 4 and the inner raceway 5 in such a manner as to roll freely therebetween in such a state that the balls 3, 3 are retained in place by a retainer (not shown). In addition, by this configuration, the outer ring 1 and the inner ring 2 are allowed to rotate relatively. Additionally, a pair of seal rings (not shown), which are each a seal member, are provided between inner circumferential surfaces of both edge portions of the outer ring 1 and outer circumferential surfaces of both edge portions of the inner ring 2 are provided, whereby an interior space 8 where the plurality of balls 3, 3 are placed is sealed at both edge portions. In addition, grease is sealed within this interior space 8 for lubrication.

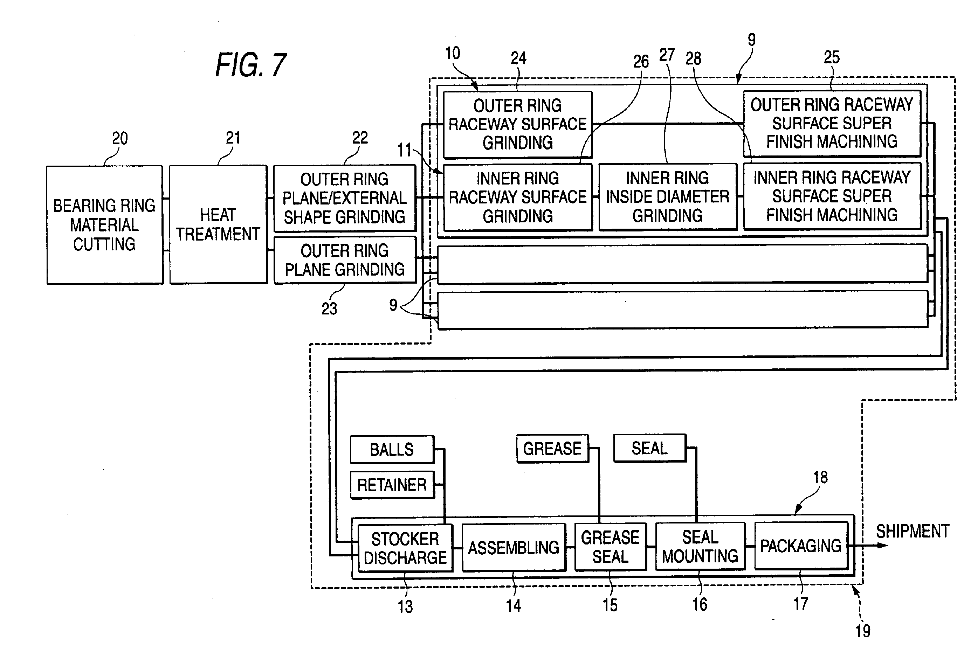

In order to manufacture ball bearings like this, it has conventionally been considered to use, for example, a ball bearing manufacturing facility whose layout is shown in Fig. 7. When manufacturing ball bearings using this manufacturing facility, firstly, as a cutting process, cutting is applied to a rod-shaped or tube-shaped material (a bearing ring material) by a cutting machine 20, and following this, a heat treatment is applied to the material by a heat treatment apparatus 21 as a heat treatment process to thereby obtain an outer ring 1 or an inner ring 2 (Fig. 6) which has been roughly shaped. Then, a planar grinding and an outer circumferential surface grinding are applied to the outer ring 1 by an outer ring primary grinding apparatus (a grinding machine) 22 as an outer ring primary grinding process, and in parallel with this, a planar grinding is applied to the inner ring 2 by an inner ring primary grinding apparatus (a grinding machine) 23 as an inner ring primary grinding process.

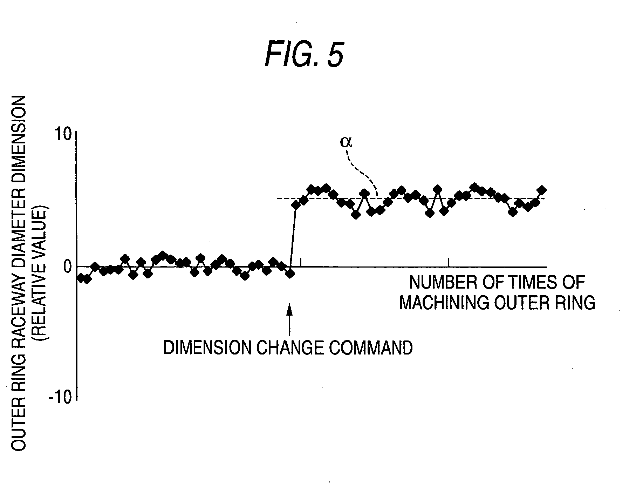

Next, the outer ring 1 and the inner ring 2 which have machined as has been described above are transferred to one of a plurality of automatic bearing ring machining lines 9, 9 which make up an automatic ball bearing manufacturing facility 19. Each of the automatic bearing ring machining lines 9 is made up of automatic outer ring machining equipment 10 and automatic inner ring machining equipment 11. Of these pieces of equipment, the automatic outer ring machining equipment 10 includes an outer ring secondary grinding apparatus (a grinding machine) 24 and an outer ring super finish machining apparatus (a super finish machining machine) 25, and the automatic inner ring machining equipment 11 includes inner ring secondary and tertiary grinding apparatuses (grinding machines) 26, 27 and an inner ring super finish machining apparatus (a super finish machining machine) 28. The outer ring secondary grinding apparatus 24 is such as to grind an outer ring raceway 4 (Fig. 5), and the outer ring super finish machining apparatus 25 is such as to machine the outer ring raceway 4 to give it a super finish. In addition, the inner ring secondary and tertiary grinding apparatuses 26, 27 are such as to grind an inner ring raceway 5 (Fig. 6) and an inner circumferential surface of the inner ring 2, respectively, and the inner ring super finish machining apparatus 28 is such as to machine the inner ring raceway 5 to give it a super finish. In addition, a working person carries a bogie having stored thereon pluralities of outer rings 1 and inner rings 2 which have been machined by the outer ring primary grinding apparatus 22 and the inner ring primary grinding apparatus 23, respectively, to near the automatic ball bearing manufacturing facility 19. Consequently, there is provided no automatic conveyor equipment between the outer ring primary grinding apparatus 22 and the inner ring primary grinding apparatus 23 and the automatic ball bearing manufacturing facility 19.

On the contrary, conveyors are provided above the grinding and super finish machining apparatuses 24, 25 which make up the automotive outer ring machining equipment 10 and the grinding and super finish machining apparatuses 26, 27, 28 of the automatic inner ring machining equipment 11 of each automatic bearing ring machining line 9. In addition, the removal of an outer ring 1 (or an inner ring 2) from each of the grinding and super finish machining apparatuses 24, 25 (or 26 to 28) and the supply of an outer ring (or an inner ring 2) to the grinding and super finish machining apparatuses 24, 25 (or 26 to 28) are enabled by an automatic conveyance apparatus which includes the conveyor and a robot.

The outer ring 1 which has been ground by the outer ring primary grinding apparatus 22 is then machined at the automatic outer ring machining equipment 10 in such a manner that grinding is applied to the outer ring raceway 4 and thereafter, the outer ring raceway 4 so ground is machined to be given a super finish. In addition, the inner ring 2 which has been ground by the inner ring primary grinding apparatus is then machined at the automatic inner ring machining equipment 11 in such a manner that the inner ring raceway 5 and an inner circumferential surface thereof are ground sequentially and thereafter, the inner ring raceway 5 so ground is machined to be given a super finish.

The outer ring 1 and the inner ring 2, which have been machined at the automatic machining equipment 10, 11, respectively, are conveyed to a stocker 13 by the automatic conveyance apparatus, so that the outer ring 1 and the inner ring 2 are temporarily stocked in this stocker 13. Thereafter, the outer rings 1 and the inner rings 2 so stocked therein are discharged from the stocker 13 based on a request from an assembling apparatus 14 which constitutes assembling equipment for a post-process. Then, the outer ring 1 and the inner ring 2, which have been so discharged, are conveyed to the assembling apparatus 14 and are then assembled together with a plurality of balls 3, 3 (refer to Fig. 6) and a retainer as an assembling process, so as to form an intermediate assembly. Following this, grease is sealed in the interior of the intermediate assembly by a grease sealing apparatus 15, and thereafter, seal rings are mounted in the intermediate assembly by a seal mounting apparatus 16, whereby a complete product is manufactured, whereafter the complete product is packaged by a packaging apparatus 17 as a packaging process for shipment.

In addition, in the automatic ball bearing manufacturing facility 19 shown in Fig. 7, conveyors are placed for the stocker 13, the assembling apparatus 14, the grease sealing apparatus 15, the seal mounting apparatus 16 and the packaging apparatus 17. In addition, the removal of outer rings 1 and inner rings 2 (or intermediate assemblies or complete products) from the individual apparatus 13 to 16 which are used in the processes occurring before the packaging process and the supply of outer rings 1 and inner rings 2 (or intermediate assemblies or complete products) to the apparatus 14 to 17 which are used in the processes occurring after the stock discharge process are enabled by an automatic conveyor apparatus which includes the conveyors and robots. Then, automatic complete product assembling equipment 18 is made up of the stocker 13, the assembling apparatus 14, the grease sealing apparatus 15, the seal mounting apparatus 16 and the packaging apparatus 17. Note that although not shown in Fig. 7, in the case of an actual ball bearing manufacturing facility, an inspection apparatus is provided for inspecting the quality of ball bearings so manufactured.

When manufacturing ball bearings in the manufacturing facility that has been described above, in the assembling process, the outer ring 1, the inner ring 2, the balls 3, 3 and the retainer need to be assembled together while making an adjustment (selection) so as to form an intermediate assembly having an interior gap of a proper size. In addition, in this case, it has been desired to increase the probability that off-line parts can be used as they are without producing defective ball bearings, the probability being also referred to as a percentage of defect-free off-line parts (a percentage of natural course of assembly). For example, in order to increase the defect-free off-line parts percentage, it has been conventional practice to automatically give a shift amount in the range of several micrometers or less to a diameter machining target value of the outer ring 4 or the inner ring 5 by a computer. In recent years, for example, in order to increase the defect-free off-line parts percentage, the diameters of the outer ring raceway 4 and the inner ring raceway 5 are measured in a matching process which occurs immediately before the assembling process to select a combination of the outer ring 1, the inner ring 2 and the balls 3, 3 which have proper diameters, and proper shift amounts are given by a computer to diameter machining target values of the inner and outer ring raceways 5, 4 based on measured values of the diameters thereof as a feedback in a continuous fashion.

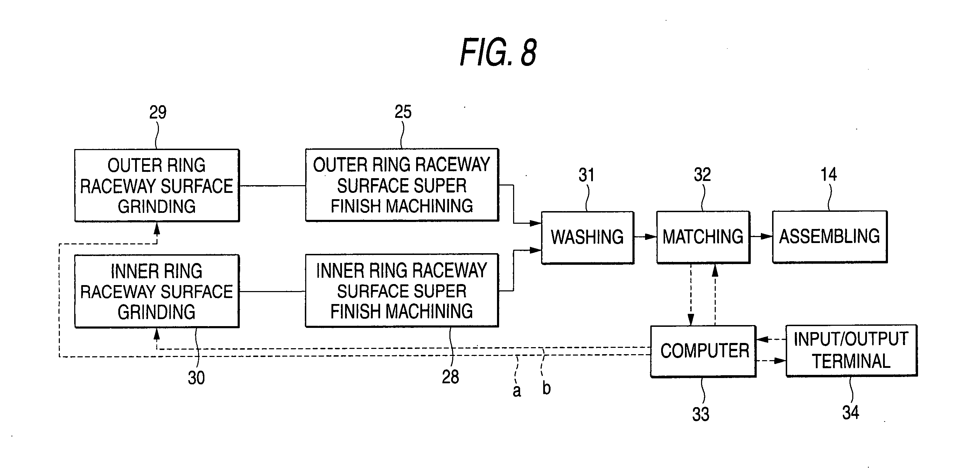

Fig. 8 illustrates an example of a combination of ball bearing manufacturing processes in a conventional manufacturing facility for manufacturing ball bearings while feedbacks are given to the diameter machining target values continuously in the way described above. When manufacturing ball bearings by this manufacturing facility, grinding and super finishing are applied to an outer ring raceway 4 (refer to Fig. 6) of an outer ring 1 by an outer ring grinding apparatus 29 and an outer ring super finish machining apparatus 25. In addition, grinding and super finishing are applied to an inner ring raceway 5 (refer to Fig. 6) of an inner ring 2 by an inner ring grinding apparatus 30 and an inner ring super finish machining apparatus 28. Then, the outer ring 1 and the inner ring 2, whose raceways have been so ground and finished, are conveyed to a washing apparatus 31 for washing. Following this, the outer ring 1 and the inner ring 2, which have been so washed, are then conveyed to a matching apparatus 32, and after the diameters of the outer ring raceway 4 and the inner ring raceway 5 are measured, balls 3 (refer to Fig. 6) having a proper diameter are selected so as to have a bearing interior gap of a proper size, the balls 3 so selected and the outer ring1 and the inner ring 2 being assembled together by an assembling apparatus 14 so as to produce an intermediate assembly.

On the other hand, the measured values of the diameters of the outer ring raceway 4 and the inner ring raceway 5 which were measured by the matching apparatus 32 are sent to a computer 33. In this computer 33, in order to obtain a bearing interior gap of a more proper size, a feedback (refer to dotted lines a, b in Fig. 8) in which a shift amount is given to a diameter machining target value of the outer ring raceway 4 or the inner ring raceway 5 is executed on the outer ring grinding apparatus 29 or the inner ring grinding apparatus 30. In the outer ring grinding apparatus 29 or inner ring grinding apparatus 30 to which the shift amount has been given, the diameter machining target value is changed from the previous one, and thereafter, a grinding is applied to the outer ring 1 or the inner ring 2 according to the diameter machining target value so sent. Note that an external input/output apparatus (an input/output terminal) 34 is connected to the computer 33.

In the case of the conventional ball bearing manufacturing facility shown in Fig. 8, a command to give the shift amount to the diameter machining target value is outputted to only the outer ring grinding apparatus 29 or the inner ring grinding apparatus 30 but is not outputted to the super finish machining apparatuses 25, 28. In other words, the shifting of the diameter machining target vale is not considered in the individual super finish machining apparatuses 25, 28. Due to this, the diameter machining target value of the outer ring grinding apparatus 29 or the inner ring grinding apparatus 30 is shifted in the process occurring before the super finish machining process, and even in the event that the diameter of the outer ring raceway 4 or the inner ring raceway 5 that has been obtained by the grinding changes, diameter machining target values at the super finish machining apparatuses 25, 28 are not changed. In this case, the machining allowance of the outer ring 1 and the inner ring 2 by the super finish machining becomes unstable, leading to a possibility that the dimensional accuracy of the diameters of the outer ring raceway 4 and the inner ring raceway 5 after the super finish machining becomes unstable. Next, this will be described in greater detail by taking as an example a case where the outer ring raceway 4 is machined to be given a super finish.

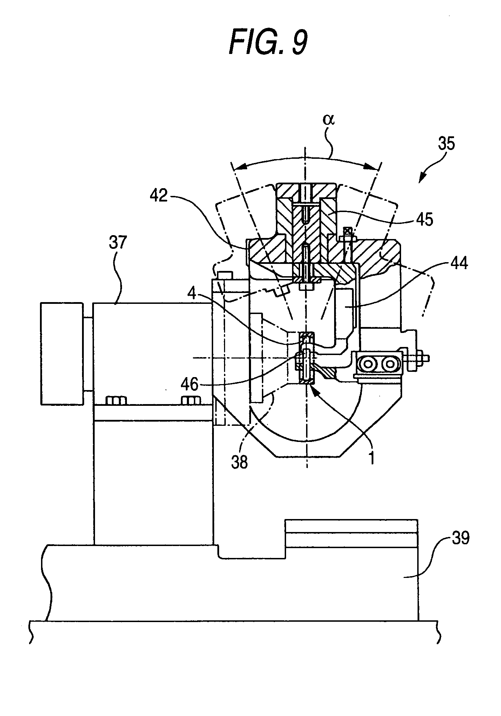

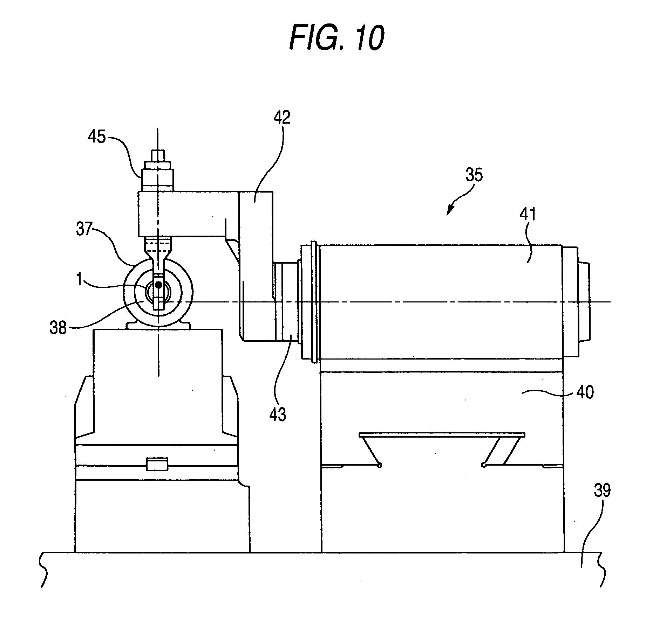

Firstly, before the description starts, the constructions of conventionally known super finish machining apparatuses will be described which are described in Japanese Patent Unexamined Publications JP-B-2,767,925 and JP-B--2, 767, 926. Figs. 9 to 10 show a super finish machining apparatus 35 described in the JP-B-2,767,925 of the JP-B-2, 767, 925 and the JP-B-2, 767, 926. Of these figures, Fig. 9 is a view resulting when the super finish machining apparatus 35 is seen in a direction which intersects the rotational axis of an outer ring 1 which is a workpiece (work) to be machined at right angles, and Fig. 10 is a similar view resulting when the super finish machining apparatus 35 is seen in the same direction in which the rotational axis of the outer ring 1 extends. This outer ring 1 is disabled in its displacement in an axial direction of a spindle of a spindle motor 37 by a backing plate 38 connected to the spindle in such a manner as to enable the transmission of power and a pressure roll, not shown. In addition, a radial displacement of the outer ring 1 is restricted by bringing a shoe, not shown, in press contact therewith based on an outer circumferential surface of the outer ring 1. By these configurations, the outer ring 1 is driven to rotate in such a state that the axial and radial displacements thereof along and about the spindle of the spindle motor 37 are disabled.

On the other hand, a rocking motor supporting table 40 is supported above a bed 39 in such a manner as to be displaced in an axial direction (a direction passing through a sheet of paper showing Fig. 10 from a front face to a rear face thereof) which is in parallel with the spindle of the spindle motor 37, and a rocking motor 41 is fixed to an upper side of the rocking motor supporting table 40. In addition, a proximal end portion of an L-shaped holder arm 42 is supported on a distal end portion of a rotational shaft of the rocking motor 41, and a vertically acting cylinder unit 43 is provided between the distal end portion of the rotational shaft and the proximal end portion of the holder arm 42. This vertically acting cylinder unit 43 enables a radial displacement of the proximal end portion of the holder arm 42 relative to the rotational shaft of the rocking motor 41 by supplying and discharging a fluid under pressure to and from an upper cylinder and a lower cylinder which are both not shown. Furthermore, a proximal end portion of a substantially U-shaped grinding stone holding arm 44 is supported on a distal end portion of the holder arm 42. In addition, the proximal end portion of the grinding stone holding arm 44 is allowed to be displaced relative to the distal end portion of the holder arm 42 by supplying and discharging a fluid under pressure or pressurized air to and from a grinding stone pressurizing cylinder unit 45 provided at the distal end portion of the holder arm 42.

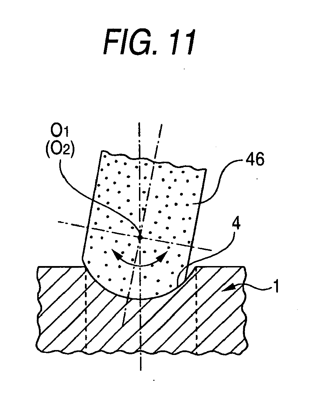

A stick-shaped super finishing grinding stone 46 is fixed to a distal end portion of the grinding stone holding arm 44. This super finishing grinding stone 46 is allowed to move in a rocking fashion through a predetermined angle α (Fig. 9) about a center axis of the rotational shaft of the rocking motor 41 as a rocking center when the rotational shaft rotates in both directions within a predetermined angular range. At the time of grinding, the super finishing grinding stone 46 is inserted into the inside of the outer ring 1 fixed to the spindle of the spindle motor 37, and as is shown in Fig. 11, the center o₁ of an arc which represents a cross section of the outer ring raceway 4 with respect to an imaginary plane including a center axis of the outer ring 1 and a rocking center o₂ of the super finishing grinding stone 46 are caused to coincide with each other. Then, in this state, the super finishing grinding stone 46 is caused to perform the rocking motion while the outer ring 1 is rotated in such a state that the super finishing grinding stone 46 is pressed against the outer ring raceway 4 by the grinding stone pressurizing unit 45, so as to machine the outer ring raceway 4 to give it a super finish. According to the super finish machining apparatus 35 which has the configuration like this, the surface of the outer ring raceway 4 can be removed uniformly in a thickness of several micrometers. Note that causing the center o₁ of the arc which represents the cross section of the outer ring raceway 4 and the rocking center o₂ of the super finishing grinding stone 46 to coincide with each other is extremely important in securing the machining accuracy of the outer ring raceway 4.

In the case of the super finish machining apparatus 35 like this, however, a diameter machining target value for the outer ring raceway 4 of the outer ring 1, which is a workpiece to be machined, is not taken into consideration. Due to this, even in the event that the diameter machining value for the outer ring raceway 4 that is obtained by grinding is changed due to the diameter machining target value at the outer ring grinding apparatus 29 (Fig. 8) being shifted in the process occurring before the super finish machining process, the diameter machining target value at the super finish machining apparatus 35 is changed in no case. In addition, in this case, a distance between the center position o₁ of the arc which represents the cross section of the outer ring raceway 4 of the outer ring 1 which is set in the super finish machining apparatus 35 and the rotational center of the outer ring 1 is changed from the previous distance. In contrast, the rocking center o₂ of the super finishing grinding stone 46 remains fixed in terms of mechanical standard, and the distance between the rotational center of the outer ring 1 and itself remains the same. As a result, the center o₁ of the arc coincides with the rocking center o₂ of the super finishing grinding stone 46 no more, and the rocking center o₂ then deviates in a direction in which the super finishing grinding stone 46 approaches the outer ring raceway 4 or in a direction in which the super finishing grinding stone 46 moves away from the outer ring raceway 4.

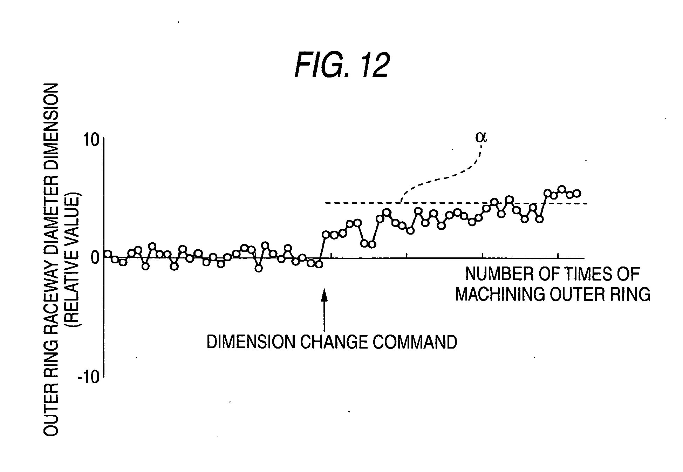

In general, the proximal end portion of the stick-shaped super finishing grinding stone 46 is supported by a supporting member (the grinding stone holding arm 44 in the construction shown in Figs. 9, 10) of the super finishing grinding stone 46 via an elastic member such as an O ring. Due to this, in case the deviation between the rocking center o₂ of the super finishing grinding stone 46 and the center o₁ of the arc of the outer ring raceway 4 is on the order of several tens of micrometers, a situation is difficult to be caused by virtue of elastic deformation of the elastic member where the super finishing grinding stone 46 is bent to be broken. In addition, as the number of times of machining the outer ring 1 increases, a distal end face of the super finishing grinding stone 46 gets worn to follow the shape of the surface of the workpiece being machined and eventually fits the surface, and therefore, it is considered in the long term that the super finish machining reaches a steady state level and is then stabilized. Immediately after the diameter machining target value of the outer ring raceway 4 has been changed in the outer ring grinding apparatus 29, however, the state changes geometrically in which the shape of the surface of the distal end face of the super finishing grinding stone 46 contacts the outer ring raceway 4 which constitutes the surface of the workpiece, and the contact surface bearing pressure distribution of the super finishing grinding stone 4 changes unstably. For example, in the event that the rocking center o₂ f the super finishing grinding stone 46 deviates relative to the center o₁ of the arc in a direction in which the super finishing grinding stone 46 moves away from the outer ring raceway 4, there is caused a tendency that the super finishing grinding stone 46 is strongly pressed against only peripheral portions of both edges of the outer ring raceway 4. Due to this, the grinding capability of the super finishing grinding stone 46 is changed, and the machining allowance by super finish machining becomes unstable, whereby the diameter machining value of the outer ring raceway 4 obtained by the super finish machining does not change accurately according to a given shift amount, leading to a possibility that the machining accuracy of the outer ring raceway 4 becomes unstable. As a result, for example, as shown in Fig. 12, when a command to change the dimension of the outer ring raceway 4 is outputted to the outer ring grinding apparatus 29 (Fig. 8), a phenomenon occurs in which an obtained machining dimension temporarily deviates largely from a change target dimension indicated by a dotted line α, this resulting in deterioration of the non-defective unit percentage in the matching process and the defect-free off-line parts percentage in the assembling process.

Furthermore, depending on machining conditions of the outer ring raceway 4, there is caused a possibility that the shape of the arc which represents the cross section of the outer ring raceway 4 is deteriorated or a so-called residual texture state results in which a part of the texture of the workpiece remains unfinished that should have been removed by super finish machining. These problems continue to exist until the number of times of machining the outer ring 1, which constitutes the workpiece, increases and the surface of the super finishing grinding stone 46 gets worn, whereby the contact surface bearing pressure distribution converges on the steady state. In addition, the aforesaid problems occur similarly not only when the super finish machining is applied to the outer ring raceway 4 of the outer ring 1 but also when the super finish machining is applied to the inner ring raceway 5 of the inner ring 2.

Furthermore, those problems occur similarly not only when the diameter machining target value of the outer ring grinding apparatus 20 or the inner ring grinding apparatus 30 for machining an outer ring 1 or an inner ring 2 to be machined based on the measured values of the diameters of the outer ring raceway 4 and the inner ring raceway 5 but also when a shift amount is given to the diameter machining target value of the outer ring grinding apparatus 29 or the inner ring grinding apparatus 30 based on a newly set target value for the interior gap of the bearing. Namely, with ball bearings of the same model number which have the same main dimensions, an appropriate interior gap is newly set (altered) for use according to a condition under which they are used. For example, the aforesaid figure, Fig. 6, illustrates the interior gap in an exaggerated fashion, and the interior gap is a sum (δ₁ + δ₂) δ₁ and δ₂. It is general practice to deal with products having different interior gaps by switching production lots at the production site.

Thus, when a command to switch production lots for different ball bearings which entrains a change in specification of interior gap is outputted when ball bearings are manufactured, at least one of the diameter machining target values of the outer ring raceway 4 and the inner ring raceway 5 is shifted (changed) by a predetermined shift amount. However, this shift amount generally takes a value of several tens of micrometers or less. Due to this, in the event that only the diameter machining target value of the outer ring grinding apparatus 29 or the inner ring grinding apparatus 30 is changed in association with this change in diameter machining target value, as has been described before, the same problems occurs as those occurring when only the diameter machining target value of the outer ring grinding apparatus 29 or the inner ring grinding apparatus 30 is shifted based on the measured values of the diame5.

In these circumstances, when the switching of production lots of ball bearings which entrains a change in specification of interior gap occurs frequently, the operator also adjusts the position of the rocking center axis of the super finishing grinding stone 46 of the super finish machining apparatuses 25, 28 (refer to Fig. 8) so as to match the change in diameter machining target value of the grinding apparatus 29, 30 for the outer ring 1 or the inner ring 2 each time the production lots of ball bearings are switched. However, the operation like this constitutes a heavy burden borne by the operator.

In these circumstances, the inventor of the invention, which is claimed for patent in this description, has come to a conclusion that in order to enhance the defect-free off-line parts percentage in the assembling process, it is not sufficient only imparting the shift amount of the diameter machining target value of the outer ring raceway 4 or the inner ring raceway 5 to the grinding apparatus.

Note that as related art documents in relation to the invention, in addition to the Japanese Patent Examined Publications JP-B-2,767,925 and JP-B-2,767,926, there are Japanese Unexamined Patent Publications JP-A-51-93480 JP-A-2000-94226 and Japanese Patent Examined Publication JP-B-3, 079, 666.
Patent Document No. 1: JP-B-2,767,925
Patent Document No. 2: JP-B-2,767,926
Patent Document No. 3: JP-A-51-93480
Patent Document No. 4: JP-A-2000-94226
Patent Document No. 5: JP-B-3, 079, 666

### Disclosure of the Invention

### Problem that the Invention is to Solve

In view of the aforesaid situations, a ball bearing manufacturing facility and a super finish machining apparatus of the invention were invented with a view to increasing the defect-free off-line parts percentage in the assembling process by increasing the dimension accuracy and configuration accuracy of an outer ring raceway and an inner ring raceway which are to be obtained.

### Means for Solving the Problem

A ball bearing manufacturing facility according to a first aspect of the invention includes an outer ring having an outer ring raceway on an inner circumferential surface thereof, an inner ring having an inner ring raceway on an outer circumferential surface thereof, and a plurality of balls which are provided between the outer ring raceway and the inner ring raceway in such a manner as to roll freely therebetween, the ball bearing manufacturing facility including bearing ring machining equipment, assembling equipment and a control unit.
Among them, the bearing ring machining equipment includes at least an outer ring grinding apparatus that grinds the outer ring raceway, an outer ring super finish machining apparatus that super finishes the outer ring raceway to give it a super finish, an inner ring grinding apparatus that grinds the inner ring raceway, and an inner ring super finish machining apparatus that super finishes the inner ring raceway to give it a super finish.

In addition, the assembling equipment assembles together the outer ring and the inner ring which have been ground and machined by the bearing ring machining equipment and a plurality of rolling elements so as to fabricate an assembly.

In addition, the control unit imparts shift amounts to diameter machining target values which are set in the grinding apparatus and the super finish machining apparatus, respectively, for grinding and machining a raceway surface of at least one bearing ring of the outer ring and the inner ring based on measured values of diameters of the outer ring raceway and the inner ring raceway which are measured after the outer ring and the inner ring have been ground and machined by the bearing ring machining equipment but before the outer ring and the inner ring are sent to the assembling equipment or a newly set target value for a bearing interior gap.

Additionally, of super finish machining apparatuses of the invention, a super finish machining apparatus according to a ninth aspect of the invention is such as to be for use in the ball bearing manufacturing facility.

In addition, a rocking center axis of a super finishing grinding stone is moved to an arbitrary position in a radial direction of a rotational axis of an outer ring or an inner ring set in place by a servomotor, so as to be positioned at the arbitrary position.

Additionally, a super finish machining apparatus according to a tenth aspect of the invention is also such as to be for use in the ball bearing manufacturing facility.

Then, a rocking center axis of a super finishing grinding stone is moved to an arbitrary position in an axial direction which is parallel to a rotational axis of an outer ring or an inner ring set in place by a servomotor, so as to be positioned at the arbitrary position.

### Advantages of the Invention

According to the ball bearing manufacturing facility of the invention which utilizes the super finish machining apparatuses that are configured as described above, since the shift amount for the diameter machining target value for the outer ring raceway or the inner ring raceway is imparted to not only the grinding apparatus but also the super finish machining apparatus, the dimension accuracy and configuration accuracy of the outer ring raceway and the inner ring raceway that are obtained can be increased, thereby making it possible to realize an increase in the defect-free off-line parts in the assembling process.

Note that a ball bearing manufacturing method is described in JP-A-51-93480 which includes the steps of determining a dimension of design for a deviation relative to a reference value of the diameter of an outer ring raceway or an inner ring raceway from a mean value of deviations of diameters of outer rings or inner rings measured after the outer rings or inner rings have been machined relative to the reference value and a mean value of deviations of diameters of balls left waiting relative to a reference value thereof or a deviation of diameters of balls which constitute the majority of balls left waiting and feeding the dimension of design so determined back to a machining apparatus for outer ring raceways or inner ring raceways. In addition, a ball bearing manufacturing system is described in JP-A-2000-94226 in which an inner ring raceway of an outer ring raceway is machined in a grinding apparatus so that a bearing interior gap becomes constant based on a measured value of the outer ring raceway or the inner ring raceway after they have been machined at a gauge unit. Additionally, a super finish machining apparatus is described in Japanese Patent Examined Publication JP-B-3,079/666 which incorporates therein an eccentric shaft rotating drive mechanism which enables the movement of a rocking center axis of a super finishing grinding stone to a radial direction of the rotational axis of an outer ring or an inner ring, which constitutes a workpiece to be machined, for positioning of the rocking center axis of the super finishing grinding stone. However, as with the JP-B-2, 767, 925 and the JP-B-2, 767,926, none of the method, system and apparatus described in the JP-A-51-93480, JP-A-2000-94226 and JP-B-3,079,666 takes it into consideration that the shift amount for the diameter machining target value for the inner ring raceway or the outer ring raceway is given to the super finishing machining apparatus. Due to this, in the case of the method, system and apparatuses described in the JP-B-2, 767, 925, JP-B-2, 767, 926, JP-A-51-93480, JP-A-2000-94226 and JP--B-3, 079, 666, there still remains a room to be improved with respect to the increase in defect-free off-line parts percentage in the assembling process. In contrast to this, in the case of the invention, there is caused no such inconvenience.

In addition, of the super finish machining apparatuses of the invention, in the case of the super finish machining apparatus according to the ninth aspect of the invention, the rocking center axis of the super finishing grinding stone is made to be moved to the arbitrary position in the radial direction of the rotational axis of the outer ring or the inner ring set in place by means of the servomotor, so as to be positioned at the arbitrary position. Due to this, giving the shift amount to the diameter machining target value in the super finish machining apparatus can be effected more effectively. On the contrary, in the case of the super finish machining apparatus described in the JP-B-3, 079, 666, the eccentric shaft rotating drive mechanism is made up of a rack piston which is driven by making use of hydraulic pressure of pneumatic pressure, and it is difficult to enable the positioning of the rocking center axis of the super finishing grinding stone at an arbitrary position according to the shift amount. Due to this, it is difficult to give the shift amount to the diameter machining target value in the super finish machining apparatus described in the JP-B-3, 079,666. According to the configuration of the ninth aspect of the invention, there is caused no such inconvenience.

In addition, in the case of the super finish machining apparatus according to the tenth aspect of the invention, the rocking center axis of the super finishing grinding stone is made to be moved to the arbitrary position in the axial direction which is parallel to the rotational axis of the outer ring or the inner ring set in place by means of the servomotor, so as to be positioned at the arbitrary position. Due to this, the outer ring or the inner ring, which is a workpiece to be machined, can easily be set in or removed for exchange from the super finish machining apparatus. In addition, the replacement of grinding stones can be facilitated.

According to a second aspect of the invention, the control unit is preferably made to obtain from a distribution of measured values of diameters of outer ring raceways and inner ring raceways of pluralities of outer rings and inner rings after the pluralities of outer rings and inner rings have been ground and machined by the bearing ring machining equipment but before the pluralities of outer rings and inner rings are sent to the assembling equipment central values of the measured values of diameters of the outer ring raceways and the inner ring raceways, respectively, and impart shift amounts to diameter machining target values which are set in the grinding apparatus and the super finish machining apparatus, respectively, for grinding and machining a raceway surface of at least one bearing ring of the outer ring and the inner ring based on a deviation of a difference between the central values relative to a target value.

In addition, according to a third aspect of the invention, the ball bearing manufacturing facility preferably includes a matching apparatus for selecting an outer ring and an inner ring which have been ground and machined by the bearing ring machining equipment and balls which have proper dimensions, respectively, for combination. In conjunction with this, the control unit is made to shift a target interior gap set in the matching apparatus and impart a shift amount to a diameter machining target value set in the grinding apparatus and the super finish machining apparatus, respectively, for grinding and machining a raceway surface of at least one bearing ring of the outer ring and the inner ring, based on a newly set target value for bearing interior gap.

Additionally, according to a fourth aspect of the invention, in the ball bearing manufacturing facility as set forth in the first aspect of the invention, the control unit is more preferably made to output a control signal which signals a shift of a diameter machining target value for an outer ring which is set in the outer ring grinding apparatus in a direction in which the outer ring is ground much or a little and, at the same time, a movement of a rocking center axis of a super finishing grinding stone which of the outer ring super finish machining apparatus by one half of a shift amount for a diameter machining target value of the outer ring grinding apparatus in a direction in which the rocking center axis moves away from or approaches a rotational center axis of the outer ring set in place, based on the measured values of diameters of the outer ring raceway and the inner ring raceway or a newly set target value for bearing interior gap.

In addition, according to a fifth aspect of the invention, the control unit is more preferably made to output a control signal which signals a shift of a diameter machining target value for an inner ring which is set in the inner ring grinding apparatus in a direction in which the inner ring is ground much or a little and, at the same time, a movement of a rocking center axis of a super finishing grinding stone of the inner ring super finish machining apparatus by one half of a shift amount for a diameter machining target value of the inner ring grinding apparatus in a direction in which the rocking center axis moves away from or approaches a rotational center axis of the inner ring set in place, based on the measured values of diameters of the outer ring raceway and the inner ring raceway or a newly set target value for bearing interior gap.

Additionally, more preferably, according to a sixth aspect of the invention, the rocking center axis of the super finishing grinding stone of at least one of the outer ring and inner ring super finish machining apparatuses is moved to an arbitrary position in a radial direction of a rotational axis of the outer ring or the inner ring set in place by a servomotor, so as to be positioned at the arbitrary position.

According to this more preferred configuration, giving the shift amount to the diameter machining target value in the super finish machining apparatus is effected more effectively. Moreover, in the event that a command to change diameter' machining target values (a sift command) which is sent to the grinding apparatus and the super finish machining apparatus due to the switching of preparation plans which entrains a change in target value for the bearing interior gap is made to be automatically outputted by a computer, the operator does not have to perform the troublesome work in which the operator changes the position of the rocking center axis of the super finishing grinding stone each time the preparation plans are switched in order to change the diameter machining target values in the super finish machining apparatus (the working time required to change the position becomes substantially zero). Due to this, not only the troublesome work can be reduced when manufacturing ball bearings but also an increase in operation rate of the manufacturing facility can be realized.

In addition, more preferably, according to a seventh aspect of the invention, the rocking center axis of the super finishing grinding stone of at least one of the outer ring and inner ring super finish machining apparatuses is moved to an arbitrary position in an axial direction which is parallel to a rotational axis of the outer ring or the inner ring set in place by a servomotor, so as to be positioned at the arbitrary position.

According to this more preferred configuration, the outer ring or the inner ring, which is a workpiece to be machined, can easily be set in or removed for exchange from the super finish machining apparatus. In addition, the replacement of grinding stones can be facilitated.

In addition, more preferably, according to an eighth aspect of the invention, the bearing ring machining equipment has outer ring machining equipment having an outer ring grinding apparatus that grinds an outer ring raceway and an outer ring super finish machining apparatus that super finishes the outer ring raceway so ground to give it a super finish, one for each, the outer ring grinding apparatus and the outer ring super finish machining apparatus being arranged in series with respect to a direction in which the outer ring, which is a workpiece, is carried and inner ring machining equipment having an inner ring grinding apparatus that grinds an inner ring raceway, an inner ring secondary grinding apparatus that grinds an inner circumferential surface of the inner ring and an inner ring super finish machining apparatus that super finishes the inner ring raceway so ground to give it a super finish, one for each, the inner ring grinding apparatus, the inner ring secondary grinding apparatus and the inner ring super finish machining apparatus being arranged in series with respect to a direction in which the inner ring, which is a workpiece, is carried. In addition, the outer ring which has been ground and machined by the outer ring machining equipment and the inner ring which has been ground and machined by the inner ring machining equipment can be supplied to the assembling equipment.

According to this more preferred configuration, the number of machining apparatuses for used in the bearing ring machining process can be reduced. Due to this, an area for setting the overall manufacturing facility can be reduced. In addition, when manufacturing ball bearings, even in the event that a change in model number according to dimensions or the like of the ball bearings (a setting change) occurs, a time for setting change which is required to change jigs and grinding stones can be reduced. Furthermore, the number of management labor hours can be reduced which are necessary to feed back to the respective machining apparatuses countermeasures against quality problems attributed to the bearing ring machining process which were detected in the assembling process.

### Brief Description of the Drawings

Fig. 1 is a diagram showing a ball bearing manufacturing facility according to an embodiment of the invention with part thereof omitted;
Fig. 2 is a diagram showing manufacturing equipment which is used in a process occurring before a stock discharge process in Fig. 1;
Fig. 3 is a diagram showing an outer ring secondary grinding apparatus for use in the embodiment;
Fig. 4 is a schematic perspective view of a grinding stone supporting unit which makes up an outer ring super finish machining apparatus for use in the embodiment;
Fig. 5 is a diagram similar to Fig. 12 which shows results of measurements carried out to confirm effects on an increase in accuracy of a diameter machining value of an outer ring raceway by the embodiment;
Fig. 6 is a sectional view of a ball bearing which shows the size of an interior gap in an exaggerated fashion;
Fig. 7 is a diagram showing an example of a conventional ball bearing manufacturing facility;
Fig. 8 is a diagram showing another example of a conventional ball bearing manufacturing facility which includes a state in which a command based on measured values of dimensions of an outer ring raceway and an inner ring raceway is fed back to a grinding apparatus;
Fig. 9 is a diagram showing an example of a conventional construction of an outer ring grinding apparatus with part cut away;
Fig. 10 is a view resulting when Fig. 9 is viewed from the right thereof;
Fig. 11 is a partial sectional view which explains a relationship between a rocking center axis of a super finishing grinding stone and the outer ring raceway when a super finish machining is carried out; and
Fig. 12 is a diagram showing a relation between a measured value of a diameter machining value of the outer ring raceway which is measured after a super finish machining has been applied by utilizing the conventional construction and the number of times of machining.

### Description of Reference Numerals

1 outer ring; 2 inner ring; 3 ball; 4 outer ring raceway; 5 inner ring raceway; 6 control unit; 8 interior space; 9 automatic bearing ring machining line; 10 automatic outer ring machining equipment; 11 automatic inner ring machining equipment; 13, 13a stocker; 14 assembling apparatus; 15 grease sealing apparatus; 16 seal mounting apparatus; 17 packaging apparatus; 18, 18a automatic complete product assembling equipment; 19, 19a automatic ball bearing manufacturing equipment; 20 cutting apparatus; 21 heat treating apparatus; 22 outer ring primary grinding apparatus; 23 inner ring primary grinding apparatus; 24 outer ring secondary grinding apparatus; 25 outer ring super finish machining apparatus; 26 inner ring secondary grinding apparatus; 27 inner ring tertiary grinding apparatus; 28 inner ring super finish machining apparatus; 29 outer ring grinding apparatus; 30 inner ring grinding apparatus; 31 washing apparatus; 32 matching apparatus; 33 computer; 34 external input/output unit; 35 super finish machining apparatus; 36 matching assembling equipment; 37 spindle motor; 38 backing plate; 39 head; 40 rocking motor support table; 41 rocking motor; 42 holder arm; 43 vertically acting cylinder unit; 44 grinding stone holding arm; 45 grinding stone pressurizing unit; 46 super finishing grinding stone; 47 spindle motor; 48 grinding stone; 49 grinding stone rotating motor; 50a, 50b support table; 51a, 51b servomotor; 52 grinding stone supporting apparatus; 53 primary servomotor; 54 secondary servomotor; 55 rail; 56 table; 57 table translating apparatus; 58 support table; 59 primary housing; 60 secondary housing; 61 housing translating mechanism; 62 support table; 63 rocking shaft; 64 connecting rod; 65 production control system.

### Best Mode for Carrying out the Invention

Hereinafter, an embodiment of the invention will be described by reference to the drawings.

### Embodiment 1

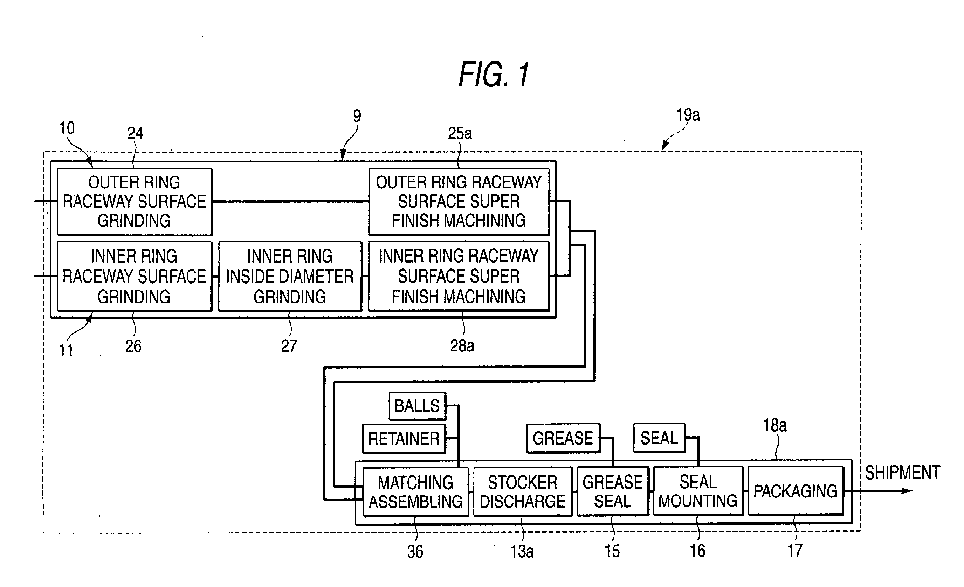

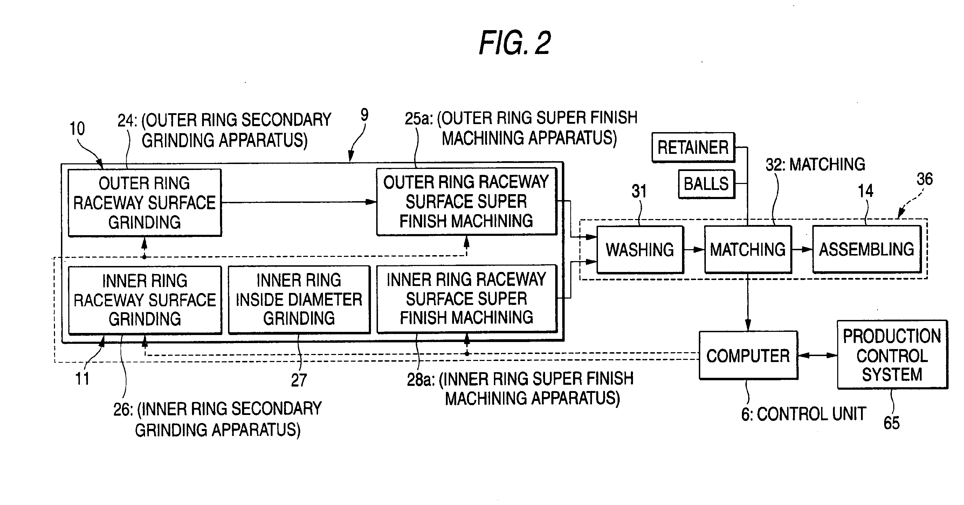

Figs. 1 to 4 shown an embodiment of the invention. In the case of a ball bearing manufacturing facility of the invention, with respect to a carrying direction (a flowing direction) (a horizontal direction in Fig. 1) of an outer ring 1, an inner ring 2 (refer to Fig. 6) or an intermediate assembly, which is a workpiece (work), a stocker 13a, which enables the storage and discharge of a plurality of intermediate assemblies, is provided between matching assembling equipment 36 and a grease sealing apparatus 15. In addition, the matching assembling equipment 36 includes, as shown in Fig. 2, a washing apparatus 31 for washing an outer ring 1 and an inner ring 2 which have been ground and machined to be given a super finish, a matching apparatus 32 for selecting an outer ring 1 and an inner ring 2 from those sent from the washing machine 31 and balls 3 (refer to Fig. 6) which have proper dimensions, respectively, for combination and an assembling apparatus 14 for fabricating an intermediate assembly by the outer ring 1 and the inner ring 2, a plurality of balls 3 and a retainer which have been sent from the matching apparatus 32. Note that in Fig. 2, arrows followed by solid lines indicate a flow of work and arrows followed by dotted lines indicate a signal indicating a measured value or a control signal to shift a diameter machining target value.

In addition, in the case of this embodiment, automatic outer ring machining equipment 10 which makes up an automatic bearing ring machining line 9 is provided with an outer ring secondary grinding apparatus 24 for grinding an outer ring raceway 4 (refer to Fig. 6) and an outer ring super finish machining apparatus 25a for machining the outer ring raceway 4 to give it a super finish, one for each, and these individual grinding and machining apparatuses 24, 25a are arranged in series with respect to a carrying direction of the outer ring 2, which is the work. In addition, automatic inner ring machining equipment 11 which makes up the automatic bearing ring machining line 9 is provided with an inner ring secondary grinding apparatus 26 for grinding an inner ring raceway 5 (refer to Fig. 6), which corresponds the inner ring grinding apparatus according to the eighth aspect of the invention, an inner ring tertiary grinding apparatus 27 for grinding an inner circumferential surface of an inner ring 2, which corresponds to the inner ring secondary grinding apparatus according to the eighth aspect of the invention, and an inner ring super finish machining apparatus 28a for machining the inner ring raceway 3 to give it a super finish, one for each, and these grinding and machining apparatuses 26, 27, 28a are arranged in series with respect to a carrying direction of the inner ring 2. In addition, the inner ring 2 and the outer ring 1 which have been ground and machined in the automatic bearing ring machining line are allowed to be supplied to the assembling apparatus 14 via the washing apparatus 31 and the matching apparatus 32. Consequently, in the case of this embodiment, a single automatic complete product assembling line 18a is combined with a single automatic bearing ring machining line 9. In addition, in the embodiment, since a process occurring before the grinding processes for outer ring raceways 4 and inner ring raceways 5 and a process occurring after a stock discharge process which utilizes the stocker 13a are similar to those of the conventional manufacturing facility shown in Fig. 7, a repeated description will be omitted or made briefly.

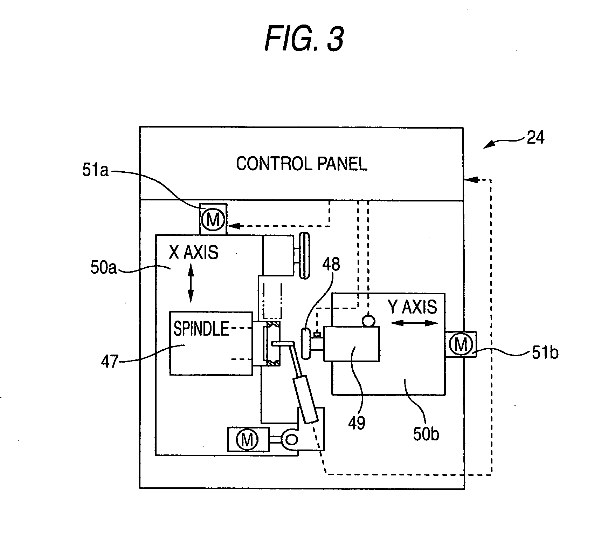

In addition, in the case of this embodiment, the outer ring secondary grinding apparatus 24 has a construction as shown in Fig. 3. When an outer ring raceway 4 is ground by this outer ring secondary grinding apparatus 24, firstly, an outer ring 1, which is a workpiece, is fixed to a spindle BR> of a spindle motor 47, and an annular grinding stone 48, which is molded to have a predetermined outer circumferential surface shape which matches the shape of an outer ring raceway 4 to be obtained, is inserted into the inside of the outer ring 1 in such a state that the grinding stone 48 lies eccentric relative to the outer ring 1. This grinding stone 48 is allowed to rotate about a center axis of the grinding stone 48 by being fixed to an end portion of a rotational shaft of a grinding stone rotating motor 49. In the case of the outer ring secondary grinding apparatus 24 that is configured in this way, an outer ring raceway 4 can be ground to be formed by making a cut which is directed radially outwards on an inner circumferential surface of the outer ring 1 by the grinding stone 48. In addition, in order to machine the outer ring 1 with a constant dimension, as has been known conventionally, methods can be adopted in which support tables 50a, 50b which support the grinding stone 48 or the outer ring 1 are positioned (moved) in predetermined positions by servomotors 51a, 51b, or the dimension of the outer ring 1 being ground is measured during the process, so as to detect a grinding completion state. In addition, when detecting the grinding completion state, the diameter dimension of the outer ring raceway 4 can be adjusted by changing a condition for grinding completion. Additionally, in the inner ring secondary grinding apparatus 26, in place of an outer ring 1, an inner ring 1 can be held by the outer ring secondary grinding apparatus 24, so that the grinding stone is allowed to be pressed against an outer circumferential surface of the inner ring 2.

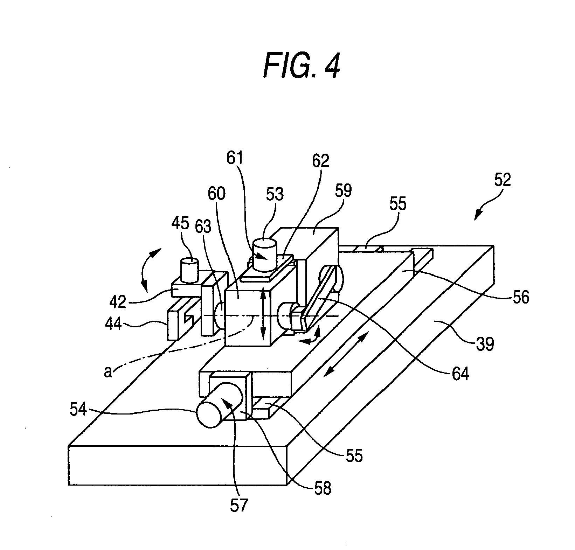

Furthermore, the outer ring super finish machining apparatus 25a includes a grinding stone supporting apparatus 52 which has a construction as shown in Fig. 4 and a workpiece supporting apparatus (not shown). Of these apparatuses, as with the super finish machining apparatus 35 shown in Figs. 9, 10, the workpiece supporting apparatus includes a spindle motor 37 and a bed 39 to which the spindle motor 37 is fixed. In addition, a method of positioning the outer ring 1 axially and radially is similar to the method used by the super finish machining apparatus 35 shown in Figs. 9, 10. In contrast to this, the grinding stone supporting apparatus 52 enables the positioning of a rocking center axis (an alternate long and short dash line a in Fig. 4) of a stick-shaped super finishing grinding stone 46 (refer to Fig. 9) to an arbitrary position in a vertical direction in Fig. 4, which is a direction which intersects a rotational axis of the outer ring 1 set in place at right angles (a radial direction of the rotational axis) by a primary servomotor 53. Additionally, the positioning of the super finishing grinding stone 46 to an arbitrary position with respect to a horizontal direction which coincides with an axial direction which is parallel to the rotational axis of the outer ring 1 set in place, that is, a direction which passes from a front face to a rear face of a sheet of paper on which Fig. 4 is shown is enabled by a secondary servomotor 54.

Namely, to describe the construction shown in Fig. 4 in detail, the grinding stone supporting apparatus 52 has a pair of rails 55, 55 provided on an upper surface of the bed 39. Then, a table 56 is mounted on these rails 55, 55 in such a manner as to be translated with respect to a longitudinal direction of the rails 55, 55 (a direction which passes from the front face to the rear face of the sheet of paper showing Fig. 4), and the movement of the table 56 relative to the bed 39 is enabled by a table translating mechanism 57. This table translating mechanism 57 includes an externally threaded rod (not shown) which is elongated in the longitudinal direction of the rails 55, 55 and the secondary servomotor 54 for driving to rotate the externally threaded rod. Both end portions of the externally threaded rod are supported on a support table 58 which is fixed to the bed 39 in such a manner as to be allowed to only rotate. In addition, an output shaft of the secondary servomotor 54 is coupled to the externally threaded rod in such a manner as to transmit power. Additionally, a threaded hole (not shown) is formed in a lower portion of the table 56 in such a manner as to extend in the longitudinal direction of the rails 55, 55, so that an externally threaded portion of the externally threaded rod is screwed into an internally threaded portion of the threaded hole. Consequently, the table 56 can be translated relative to the bed 39 to reach a predetermined position in the longitudinal direction of the rails 55, 55 by rotating the secondary servomotor 54 forwards or backwards.

In addition, a primary housing 59 is fixed to the table 56, and a secondary housing 60 is supported to a side of the primary housing 59 in such a manner as to be allowed to be translated only with respect to a vertical direction in Fig. 4. Then, the vertical translation of the secondary housing 60 relative to the primary housing 59 is enabled by a housing translating mechanism 61. This housing translating mechanism 61 includes a secondary externally threaded rod (not shown) which is elongated in the vertical direction and the primary servomotor 53 for driving to rotate the secondary externally threaded rod. Both end portions of the secondary externally threaded rod are supported on a support table 62 which is fixed to the side of the housing 59 in such a manner as to be allowed to only rotate. In addition, an externally threaded portion of the secondary externally threaded rod is screwed into an internally threaded portion of a vertically elongated threaded hole (not shown) provided in a member which is fixed to the secondary housing 60. Consequently, the secondary housing 60 can be translated relative to the primary housing 50 to reach a vertical predetermined position by rotating the primary servomotor 53 forwards or backwards.

In addition, a rocking motor (not shown) is fixed to the primary housing 59, and a rocking shaft 63 is rotatably supported on the secondary housing 60. Then, a known rocking mechanism is provided between a portion of one end portion of the rocking shaft 63 which protrudes outwards from the secondary housing 60 and a portion of one end portion of a rotational shaft of the rocking motor which protrudes outwards from the primary housing 59. This rocking mechanism is made up by supporting a support shaft which supports one end portion (an end portion lying on the rear face of the sheet of paper showing Fig. 4) of a connecting rod 64 and which is provided at the other end portion (an end portion lying on the front face of the sheet of paper showing Fig. 4) of the connecting rod 64 on an eccentric shaft which is provided on the portion of the end portion of the rotational shaft of the rocking motor which protrudes outwards from the primary housing in such a state that the eccentric shaft is eccentric relative to a center axis of the rotational shaft in a arc-shaped guide portion (not shown) which is provided at the portion of the end portion of the rocking shaft 63 which protrudes outwards form the secondary housing 60 in such a manner as to be developed about the center axis of the rocking shaft 63. In addition, a proximal end portion of a substantially L-shaped holder arm 42 is fixed to a portion of the other end portion of the rocking shaft 63 which protrudes outwards from the secondary housing 60, and a grinding stone holding arm 44 is supported at a distal end portion of the holder arm 42. Then, this grinding stone holding arm 44 is allowed to be displaced relative to the distal end portion by a grinding stone pressurizing cylinder unit 45 which is provided at the distal end portion of the holder arm 42. In addition, a stick-shaped grinding stone 46 (refer to Fig. 9) is fixed to a distal end portion of the grinding stone holding arm 44. The configuration itself of the holder arm 42, the grinding stone pressurizing cylinder unit 45 and the grinding stone holding arm 44 is similar to that of the conventional super finish machining apparatus 35 shown in Figs. 9, 10 except that the vertical acting cylinder apparatus 43 (refer to Fig. 10) is omitted. Then, the rocking motion of the super finishing grinding stone 46 within a predetermined angle is enabled to occur about the center axis of the rocking shaft 63 which acts as the center of rocking by rotating the rocking motor. In addition, the inner ring super finish machining apparatus 28a (Figs. 1, 2) is similar to the conventional inner ring super finish machining apparatus 28 in that an inner ring 2, instead of an outer ring 1, is held by the outer ring super finish machining apparatus 25a which is configured as has been described above, so that the super finishing grinding stone can be pressed against an inner ring raceway formed on an outer circumferential surface of the inner ring 2.

An automatic ball bearing manufacturing facility 19a includes both the outer ring and inner ring secondary grinding apparatuses 24, 26 and the outer ring and inner ring super finish machining apparatuses 25a, 28a, which are configured as has been described above, respectively. In addition, in the case of this embodiment, a detection unit provided on the matching apparatus 32 is connected to an input interface of a control unit 6 which is made up of a computer. This detection unit has functions to measure diameters of an outer ring raceway 4 and an inner ring raceway 5 and output signals indicating the measured values. In addition, the detection unit sends signals indicating measured values of diameters of an outer ring raceway 4 and an inner ring raceway 5 which have been measured after the outer ring raceway 4 and the inner ring raceway 5 were ground and machined by the outer ring machining equipment 10 and the inner ring machining equipment 11, respectively, but before the outer ring 1 and the inner ring 2 are carried to the assembling apparatus 14 into the input interface of the control unit 6. In a central processing unit (CPU) which is a processor module making up the control unit 6, based on a distribution of measured values of diameters d₁, d₂ (refer to Fig. 6) of outer ring raceways 4 and inner ring raceways 5 of pluralities of outer rings 1 and inner rings 2 which have been grounded and machined which is determined by time or number, central values d₁ₘ, d₂ₘ of the measured values of diameters of the outer ring raceways 4 and the inner ring raceways 5 are obtained, respectively. In parallel with this, a deviation D₃ (=D₁'-D2) of a difference D₂ of the central values d₁ₘ, d₂ₘ relative to a target value D₁' of a difference D₁ (=d₁-d₂) of the diameters d₁, d₂ of the respective raceways 4, 5, so as to obtain a proper bearing interior space. Then, the central processing unit calculates based on the deviation D₃ necessary shift amounts for diameter machining target values which are set, respectively, in the grinding apparatus 24 (or 26) for grinding an outer ring raceway 4 or an inner ring raceway 5 of one bearing ring of an outer ring 1 and an inner ring 2 which are to be ground and machined and the super finish machining apparatus 25 (or 28) for machining the outer ring raceway 4 or the inner ring raceway 5 to give it a super finish.

Then, the control unit 6 sends control signals to the grinding apparatus 24 (or 26) for grinding an outer ring raceway 4 or an inner ring raceway 5 of one bearing ring of an outer ring 1 and an inner ring 2 which are to be ground and machined and the super finish machining apparatus 25 (or 28) for machining the outer ring raceway 4 or the inner ring raceway 5 to give it a super finish, so as to trigger the shift of the diameter machining target values by the shift amounts. In the grinding and machining apparatuses 24, 26, 25a, 28a to which the control signals have been so sent, the grinding position of the grinding stone 48 or the super finishing grinding stone 46 relative to the outer ring 1 or the inner ring 2 which is set in place is changed based on the control signals. For example, when the control signals are sent to the outer ring secondary grinding apparatus 24 and the outer ring super finish machining apparatus 25a by the control unit 6, in the outer ring secondary grinding apparatus 24, the diameter machining target value for an outer ring raceway 4 is shifted in a direction in which the outer ring raceway 4 is ground much or a little, and the grinding stone 48 is displaced relative to the outer ring raceway 4 in a direction in which the grinding stone 48 is pressed against or moved away from the outer ring raceway 4. At the same time, in the outer ring super finish machining apparatus 25a, the primary servomotor 53 (Fig. 4) is rotated in a predetermined direction by a predetermined amount so as to shift the rocking center axis (an alternate long and short dash line a in Fig. 4) of the super finishing grinding stone 46 in a direction in which the rocking center axis moves away from or approaches the rotational center axis of the outer ring 1 set in place, which is the vertical direction in Fig. 4, by one half of the shift amount of the diameter machining target value for the outer ring raceway 4 in the outer ring secondary grinding apparatus 24.

In addition, when the control signals are sent to the inner ring secondary grinding apparatus 26 and the inner ring super finish machining apparatus 28a by the control unit 6, in the inner ring secondary grinding apparatus 26, the diameter machining target value for an inner ring raceway 5 is shifted in a direction in which the inner ring raceway 5 is ground much or a little, and the grinding stone is displaced relative to the inner ring raceway 5 in a direction in which the grinding stone is pressed against or moved away from the inner ring raceway 5. At the same time, in the inner ring super finish machining apparatus 28a, the primary servomotor is rotated in a predetermined direction by a predetermined amount so as to shift the rocking center axis of the super finishing grinding stone in a direction in which the rocking center axis moves away from or approaches the rotational center axis of the inner ring set in place by one half of the shift amount of the diameter machining target value for the inner ring raceway 5 in the inner ring secondary grinding apparatus 26.

Furthermore, a production control system 65 is connected to an input/output signal processing module of the control unit 6. Then, when a command to switch production lots to manufacture ball bearings of a new specification which entrains a change in bearing interior gap from this production control system 65, the central processing unit calculates necessary shift amounts for the diameter machining target values which are set, respectively, in the grinding apparatus 24 (or 26) for grinding an outer ring raceway 4 or an inner ring raceway 5 of one bearing ring of an outer ring 1 and an inner ring 2 which are to be ground and machined and the super finish machining apparatus 25 (or 28) for machining the outer ring raceway 4 or the inner ring raceway 5 to give it a super finish.

Then the control unit sends control signals the grinding apparatus 24 (or 26) for grinding an outer ring raceway 4 or an inner ring raceway 5 of one bearing ring of an outer ring 1 and an inner ring 2 which are to be ground and machined and the super finish machining apparatus 25 (or 28) for machining the outer ring raceway 4 or the inner ring raceway 5 to give it a super finish, so as to trigger the shift of the diameter machining target values by the shift amounts. In the grinding and machining apparatuses 24, 26, 25a, 28a to which the control signals have been so sent, the grinding position of the grinding stone 48 or the super finishing grinding stone 46 relative to the outer ring 1 or the inner ring 2 which is set in place is changed based on the control signals. A function resulting when the control signals are sent to the outer ring secondary grinding apparatus 24 and the outer ring super finish machining apparatus 25a and a function resulting when the control signals are sent to the inner ring secondary grinding apparatus 26 and the inner ring super finish machining apparatus 28a are themselves similar to those which result when the shift amounts are imparted, based on the deviation D₃, to the diameter machining target values in the grinding apparatus 24 (or 26) for grinding the raceway 4 (or 5) of at least one bearing ring of the outer ring 1 and the inner ring 2 and the super finish machining apparatus 25a (or 28a) for machining the raceway 4 (or 5) to give it a super finish.

According to the ball bearing manufacturing facility of the embodiment which is configured as has been described heretofore, since the shift amounts for the diameter machining target values for the outer ring raceway 4 or the inner ring raceway 5 are imparted to not only the grinding apparatus 24 (or 26) but also the super finish machining apparatus 25a (or 28a), the dimension accuracy and configuration accuracy of the outer ring raceway 4 and the inner ring raceway 5 that are to be obtained can be increased, thereby making it possible to increase the defect-free off-line parts percentage in the assembling line.

In addition, in the case of the super finish machining apparatuses 25a, 28a of the embodiment, the rocking center axis (the alternate long and short dash line a in Fig. 4) is moved to an arbitrary position in a radial direction of the rotational axis of the outer ring 1 or the inner ring 2 which is set in place by the servomotor 53, so as to be positioned in this arbitrary position. Due to this, imparting the shift mounts to the diameter machining target values in the super finish machining apparatuses 25a, 28a can be executed effectively. Moreover, in the event that a command to change diameter machining target values which is sent to the grinding apparatus 24 (or 26) and the super finish machining apparatus 25a (or 28a) due to the switching of preparation plans which entrains a change in target value for the bearing interior gap is made to be automatically outputted by the control unit 6, the operator does not have to perform the troublesome work in which the operator changes the position of the rocking center axis of the super finishing grinding stone 46 each time the preparation plans are switched in order to change the diameter machining target values in the super finish machining apparatus 25a (or 28a) (the working time required to change the position becomes substantially zero). Due to this, not only the troublesome work can be reduced when manufacturing ball bearings but also an increase in operation rate of the manufacturing facility can be realized.

In addition, when manufacturing ball bearings using the manufacturing facility of the invention, a command to change the dimension of design for the diameter machining target value for an outer ring raceway 4 was outputted, and a relation between a measured value of the diameter of the outer ring raceway 4 measured by the matching apparatus 32 and the number of times of machining during a period of time including time both before and after the command was obtained to thereby obtain a result as shown in Fig. 5. In Fig. 5, a diameter machining target value for the outer ring raceway 4 after the dimension change command is indicated by a dotted line α. As is obvious from the result of the measurement shown in Fig. 5, in the case of this embodiment, the diameter of the outer ring raceway 4 which resulted after it had been machined was changed immediately after the command to change the dimension of design was outputted and was stabilized with high accuracy.

In addition, in the case of the super finish machining apparatuses 25a, 28a of this embodiment, the rocking center axis of the super finishing grinding stone 46 is moved to an arbitrary position in an axial direction which is parallel to the rotational axis of the outer ring 1 or the inner ring 2 which is set in place by the secondary servomotor 54, so as to be positioned in the arbitrary position. Due to this, the outer ring 1 or the inner ring 2, which is a workpiece to be machined, can easily be set in or removed for exchange from the super finish machining apparatus 25a, 28a. In addition, the replacement of grinding stones can be facilitated.

In addition, when switching preparation plans due to a change to a different ball bearing having different dimensions under a different model number under or performing a so-called setting change, it has been considered conventionally in the grinding apparatus that the setting of the machining position of the grinding stone is automatically changed by a servomotor based on a command from the computer. In a conventionally known super finish machining apparatus, the positioning of a rocking center axis of a super finishing grinding stone is executed by a mechanical stopper and a cylinder drive unit which makes use of pressurized fluid or pressurized air. Due to this, there was caused a problem that a long period of time was necessary to change the position of the rocking center axis and the time during which the operation of the manufacturing facility has to be stopped became long. On the contrary to this, in the case of the embodiment, the rocking center axis of the super finishing grinding stone 46, which makes up the outer ring and inner ring super finish machining apparatuses 25a, 28a, is positioned in the arbitrary position in the vertical direction which is spaced apart an arbitrary distance from the rotational axis of the outer ring 1 or the inner ring 2 which is set in place and in the arbitrary position in the axial position which is parallel to the rotational axis by the primary and secondary servomotors 53, 54, respectively. Due to this, by making the rocking center axis of the super finishing grinding stone 46 be automatically changed in position by the command from the control unit 6, the setting change can be completed within a short period of time without troubling the operator.

Furthermore, in the case of this embodiment, the bearing ring machining line 9 is made to include the automatic outer ring machining equipment 10 and the automatic inner ring machining equipment 11. In addition, this automatic outer ring machining equipment 10 has the outer ring secondary grinding apparatus 24 for grinding an outer ring raceway 4 and the outer ring super finish machining apparatus 25a for machining the outer ring raceway 4 so ground to give it a super finish, one for each, and these grinding and machining apparatuses 24, 25a are arranged in series with respect to the direction in which the outer ring, which is a workpiece, is carried. In addition, the automatic inner ring machining equipment 11 has the inner ring secondary grinding apparatus 26 for grinding an inner ring raceway 5, the inner ring tertiary grinding apparatus 27 for grinding an inner circumferential surface of the inner ring 2 and the inner ring super finish machining apparatus 28a for machining the inner ring raceway 5 so ground to give it a super finish, one for each, and these grinding and machining apparatuses are arranged in series with respect to the direction in which the inner ring 2, which is a workpiece, is carried. In addition, the outer ring 1 which has been ground and machined by the automatic outer ring machining equipment 10 and the inner ring 2 which has been ground and machined by the automatic inner ring machining equipment 11 can be supplied to the assembling apparatus 14 via the washing apparatus 31 and the matching apparatus 32. Due to this, in the case of this embodiment, being different from the conventional ball bearing manufacturing facility shown in Fig. 7, the number of machining apparatuses for used in the bearing ring machining process can be reduced, whereby an area where to set the overall manufacturing facility can reduced. In addition, when manufacturing ball bearings of a certain type, even in the event that a change in model number (a setting change) occurs due to the dimensions of ball bearings of the type, a time necessary to change jigs and grinding stones can be reduced. Furthermore, the number of management labor hours can be reduced which are necessary to feed back to the respective machining apparatuses countermeasures against quality problems attributed to the bearing ring machining process which were detected in the assembling process.

Note that while in the embodiment, the machining position of the super finish machining apparatuses 25a, 28a relative to the work piece has been described as being one, in the sixth, seventh, ninth and tenth aspects of the invention, the invention is not limited to the configuration like that. For example, in the event that the super finish machining apparatuses 25a, 28a each have a plurality of machining positions, a plurality of rocking center axes of the super finishing grinding stone 46 may be changed in position by the servomotors independently from each other, or one or all the rocking center axes can be changed in position by the same servomotor.

In addition, while in the embodiment, the inner ring tertiary grinding apparatus 27 for grinding the inner circumferential surface of the inner ring 2 is described as being incorporated in the automatic bearing ring machining facility 19a, this inner ring tertiary grinding apparatus 27 can be used in a process occurring before the process in which the automatic bearing ring machining facility 19a is used. In addition, the ball bearing manufacturing facility of the invention is not limited to the configuration in which the equipment and apparatuses are all placed in the same area of a plant. For example, in the embodiment that has been described above, only the automatic complete products assembling line 18a can be placed in a room in which dust in the air is controlled specially severely. In addition, in the embodiment described above, by keeping a plurality of parts or complete produces waiting in succession on the conveyor of the automatic carrier system, wasteful time attributed to the conveyance of parts and complete products can be reduced or eliminated. While the invention has been described in detail with reference to the specific embodiment, it is obvious to those skilled in the art to which the invention pertains that the invention can be changed or modified variously without departing from the spirit and scope of the invention.

The subject patent application is based on the Japanese Patent Application (No. 2004-337519) filed on November 22, 2004 and the contents thereof are incorporated herein by reference.

## Claims

1. A ball bearing manufacturing facility for manufacturing a plurality of ball bearings each comprising:
an outer ring having an outer ring raceway on an inner circumferential surface thereof,
an inner ring having an inner ring raceway on an outer circumferential surface thereof, and
a plurality of balls which are rotatably provided between the outer ring raceway and the inner ring raceway,
the ball bearing manufacturing facility comprising:
a bearing ring machining equipment;
a assembling equipment; and
a control unit, wherein
the bearing ring machining equipment comprises:
an outer ring grinding apparatus that grinds the outer ring raceway;
an outer ring super finish machining apparatus that super finishes the outer ring raceway;
an inner ring grinding apparatus that grinds the inner ring raceway; and
an inner ring super finish machining apparatus that super finishes the inner ring raceway,
the assembling equipment assembles together the outer ring and the inner ring, which have been ground and machined by the bearing ring machining equipment, and the plurality of rolling elements so as to fabricate an assembly,
the control unit imparts shift amounts to diameter machining target values, which are set in the grinding apparatus and the super finish machining apparatus, respectively, for grinding and machining a raceway surface of at least one of the outer ring and the inner ring, based on measured values of diameters of the outer ring raceway and the inner ring raceway, which are measured after the outer ring and the inner ring have been ground and machined by the bearing ring machining equipment but before the outer ring and the inner ring are sent to the assembling equipment, or a newly set target value for a bearing interior gap.

2. The ball bearing manufacturing facility as set forth in Claim 1, wherein
the control unit performs the following controls:
measuring a distribution of measured values of diameters of the plurality of outer ring raceways and inner ring raceways of the outer ring and inner ring after the pluralities of outer rings and inner rings have been ground and machined by the bearing ring machining equipment but before the pluralities of outer rings and inner rings are sent to the assembling equipment;
calculating central values of the measured values of diameters of the outer ring raceways and the inner ring raceways, respectively; and
imparting shift amounts to diameter machining target values which are set in the grinding apparatus and the super finish machining apparatus, respectively, for grinding and machining a raceway surface of at least one bearing ring of the outer ring and the inner ring based on a deviation of a difference between the central values relative to the target value.

3. The ball bearing manufacturing facility as set forth in Claim 1, further comprising:
a matching apparatus for selecting an outer ring, an inner ring which have been ground and machined by the bearing ring machining equipment and balls, which have proper dimensions for combining, wherein
the control unit shifts a target interior gap set in the matching apparatus and imparts a shift amount to a diameter machining target value set in the grinding apparatus and the super finish machining apparatus, respectively, for grinding and machining a raceway surface of at least one bearing ring of the outer ring and the inner ring, based on a newly set target value for the bearing interior gap.

4. The ball bearing manufacturing facility as set forth in Claim 1, wherein
the control unit outputs a control signal which signals:
a shift of a diameter machining target value for the outer ring which is set in the outer ring grinding apparatus in a direction in which the outer ring is ground much or a little and; and at the same time,
a movement of a rocking center axis of a super finishing grinding stone which of the outer ring super finish machining apparatus by one half of a shift amount for a diameter machining target value of the outer ring grinding apparatus in a direction in which the rocking center axis moves away from or approaches a rotational center axis of the outer ring set in place,
based on the measured values of diameters of the outer ring raceway and the inner ring raceway or a newly set target value for bearing interior gap.

5. The ball bearing manufacturing facility as set forth in Claim 1, wherein
the control unit outputs a control signal which signals:
a shift of a diameter machining target value for an inner ring which is set in the inner ring grinding apparatus in a direction in which the inner ring is ground much or a little; and
a movement of a rocking center axis of a super finishing grinding stone of the inner ring super finish machining apparatus by one half of a shift amount for a diameter machining target value of the inner ring grinding apparatus in a direction in which the rocking center axis moves away from or approaches a rotational center axis of the inner ring set in place,
based on the measured values of diameters of the outer ring raceway and the inner ring raceway or a newly set target value for bearing interior gap.

6. The ball bearing manufacturing facility as set forth in Claim 4, wherein the rocking center axis of the super finishing grinding stone of at least one of the outer ring and inner ring super finish machining apparatuses is moved to an arbitrary position in a radial direction of a rotational axis of the outer ring or the inner ring set in place by a servomotor, so as to be positioned at the arbitrary position.

7. The ball bearing manufacturing facility as set forth in Claim 4, wherein the rocking center axis of the super finishing grinding stone of at least one of the outer ring and inner ring super finish machining apparatuses is moved to an arbitrary position in an axial direction which is parallel to a rotational axis of the outer ring or the inner ring set in place by a servomotor, so as to be positioned at the arbitrary position.

8. The ball bearing manufacturing facility as set forth in Claim 1, wherein the bearing ring machining equipment has:
outer ring machining equipment having an outer ring grinding apparatus that grinds an outer ring raceway and an outer ring super finish machining apparatus that super finishes the outer ring raceway so ground to give it a super finish, one for each, the outer ring grinding apparatus and the outer ring super finish machining apparatus being arranged in series with respect to a direction in which the outer ring, which is a workpiece, is carried; and
inner ring machining equipment having an inner ring grinding apparatus that grinds an inner ring raceway, an inner ring secondary grinding apparatus that grinds an inner circumferential surface of the inner ring and an inner ring super finish machining apparatus that super finishes the inner ring raceway so ground to give it a super finish, one for each, the inner ring grinding apparatus, the inner ring secondary grinding apparatus and the inner ring super finish machining apparatus being arranged in series with respect to a direction in which the inner ring, which is a workpiece, is carried, wherein
the outer ring which has been ground and machined by the outer ring machining equipment and the inner ring which has been ground and machined by the inner ring machining equipment are capably of being supplied to the assembling equipment.

9. A super finish machining apparatus for use in the ball bearing manufacturing facility set forth in Claim 1, wherein
a rocking center axis of a super finishing grinding stone is moved to an arbitrary position in a radial direction of a rotational axis of an outer ring or an inner ring set in place by a servomotor, so as to be positioned at the arbitrary position.

10. A super finish machining apparatus for use in the ball bearing manufacturing facility set forth in Claim 1, wherein a rocking center axis of a super finishing grinding stone is moved to an arbitrary position in an axial direction which is parallel to a rotational axis of an outer ring or an inner ring set in place by a servomotor, so as to be positioned at the arbitrary position.
